# EUROPEAN PATENT SPECIFICATION

(11) **EP 3 270 367 B1**
(45) Date of publication and mention of the grant of the patent: **03.11.2021**
(21) Application number: 16179404.5
(22) Date of filing: 14.07.2016
(51) Int. Cl.: G09B 9/04

(54) **A DRIVING SIMULATOR PLATFORM AND A DRIVING SIMULATOR**
FAHRSIMULATORPLATTFORM UND FAHRSIMULATOR
PLATE-FORME DE SIMULATEUR DE CONDUITE ET SIMULATEUR DE CONDUITE

(43) Date of publication of application: 17.01.2018
(73) Proprietor: Adevotech AB, 831 41 Östersund (SE)
(72) Inventor: Ernkvist, Bertil, 831 34 Östersund (SE)
(74) Representative: AWA Sweden AB

(56) References cited:
- US-A- 4 478 407
- US-A1- 2003 007 795
- US-A1- 2007 018 511

## Description

### FIELD OF THE INVENTION

The present invention relates to a vehicle driving simulator platform to be a part of a vehicle driving simulator, and also to a vehicle driving simulator.

### BACKGROUND OF THE INVENTION

A vehicle driving simulator platform is a part of a vehicle driving simulator, which can be used for gaming purposes as well as for professional driving practice, both for drivers practicing to acquiring a driving licence and for drivers already having a licence but training to increase their skills.

US 2007/0018511 discloses a vehicle driving simulator including a vehicle driving simulator platform, which provides a full range of motions. However, the vehicle driving simulator platform is huge and complex. The long distance translational movements may not be necessary or may be simulated by other means, in order to achieve a more compact structure.

US4478407 discloses a further vehicle driving simulator platform known in the art.

### SUMMARY OF THE INVENTION

It would be advantageous to provide a compact vehicle driving simulator platform, which is still able to provide movement basis for a realistic driving experience to a person sitting in a driving cabin mounted thereon.

To better address this concern, in a first aspect of the invention there is presented a vehicle driving simulator platform comprising a base element, a pivoting frame, arranged at the top of the base element, and pivotally attached to the base element, a first pivoting actuator attached to the base element and to the pivoting frame for causing the pivoting frame to pivot about a first horizontal axis, a first rotator pivotally attached to the pivoting frame, and arranged on top of the pivoting frame, a second pivoting actuator attached to the pivoting frame and to the rotator for causing the rotator to pivot about a second horizontal axis, which is perpendicular to the first horizontal axis, and a vehicle compartment connection, which is attached to the rotator, and thereby is rotatable.

By means of the double pivoting and rotation in combination, it is possible to generate a vast range of movement sensations for the driver sitting in a driver cabin mounted at the vehicle driving simulator platform.

In accordance with an embodiment of the vehicle driving simulator platform, the vehicle compartment connection is a quick release device. The vehicle compartment quick release makes it possible to change between different kinds of vehicle compartments in an easy way.

In accordance with an embodiment of the vehicle driving simulator platform, the base element is a base pillar. The base pillar can be provided in different lengths or be made extendible to adapt the height of the platform to different vehicle applications.

In accordance with an embodiment of the vehicle driving simulator platform, the first pivoting actuator has a lower end, which is connected with the base element at a side of the base element, and an upper end, which is connected with the pivoting frame at a first side thereof, and wherein the first pivoting actuator is extendible and retractable. This construction contributes to the compactness of the platform.

In accordance with an embodiment of the vehicle driving simulator platform, it has demountable overturn prevention elements protruding from the base element. Thereby, a good stability of the platform is achieved while limiting its size when transporting it by demounting the overturn prevention elements.

In accordance with an embodiment of the vehicle driving simulator platform, the second pivoting actuator has a lower end, which is connected with the pivoting frame at a second side thereof, and an upper end, which is connected with the first rotator, wherein the second pivoting actuator is extendible and retractable. This construction contributes to the compactness of the platform.

In accordance with the present invention there is also provided a vehicle driving simulator comprising a vehicle driving simulator platform according as described above, and a vehicle compartment, which is connected with the vehicle driving simulator platform. The vehicle compartment comprises a bottom portion having a coupling part which is connected with the vehicle compartment connection, and a top portion comprising a driver cabin and a display device for displaying an environment visible from the driver cabin. Thereby, the vehicle driving simulator is provided with necessary basic movement opportunities.

In accordance with an embodiment of the vehicle driving simulator, it is releasably connected with the vehicle compartment connection. Thereby the vehicle compartment is readily demounted and it is possible to switch between different kinds of vehicle compartments representing different types of vehicles.

In accordance with an embodiment of the vehicle driving simulator, the bottom portion comprises a base beam, a driver cabin support, which is pivotally connected with the base beam, and which supports the driver cabin, and a third pivoting actuator attached to the base beam and to the driver cabin support to pivot the driver cabin support about a third horizontal axis positioned where the driver cabin support is attached to the base beam. Thereby further movement possibilities are added.

In accordance with an embodiment of the vehicle driving simulator, the driver cabin support comprises a second rotator, wherein the driver cabin is pivotally connected with the second rotator. Thereby further movement possibilities are added.

In accordance with an embodiment of the vehicle driving simulator, the driver cabin support comprises a fourth pivoting actuator, which is connected to the driver cabin and to the second rotator for pivoting the driver cabin about a fourth horizontal axis positioned where the driver cabin is pivotally connected with the second rotator. Thereby further movement possibilities are added.

In accordance with an embodiment of the vehicle driving simulator, the base beam extends radially of the first rotator, the coupling portion is arranged at a first end of the base beam and the driver cabin is positioned at a second end of the base beam at a radial distance from the first end. Thereby the driver cabin is positioned at a distance from the rotational axis of the first rotator, enabling larger movements of the driver cabin.

In accordance with an embodiment of the vehicle driving simulator, the driver cabin is one of a truck cabin, a rescue vehicle cabin, a car cabin, and a cabin of a flying vehicle. Thus, several different types of vehicle environments are provided. It should be noted that for the purposes of this application, as evident from this embodiment, the term "driver cabin" includes cabins of all kinds of vehicles, i.e. vehicles used on the land, at the sea, in the air and in the space.

In accordance with an embodiment of the vehicle driving simulator, the driver cabin comprises windows, and the display device comprises a set of monitors arranged outside of the windows. By this arrangement it is possible to give the driver a realistic illusion of actually being in the displayed environment.

### BRIEF DESCRIPTION OF THE DRAWINGS

The invention will now be described in more detail and with reference to the appended drawings in which:
Fig. 1 shows an embodiment of a vehicle driving simulator according to the present invention;
Figs. 2a-2c show a part of the embodiment of Fig. 1;
Fig. 3 shows an embodiment of a vehicle driving simulator platform which is included in the vehicle driving simulator of Fig. 1;
Fig. 4 shows another embodiment of a vehicle driving simulator according to this invention.

### DESCRIPTION OF EMBODIMENTS

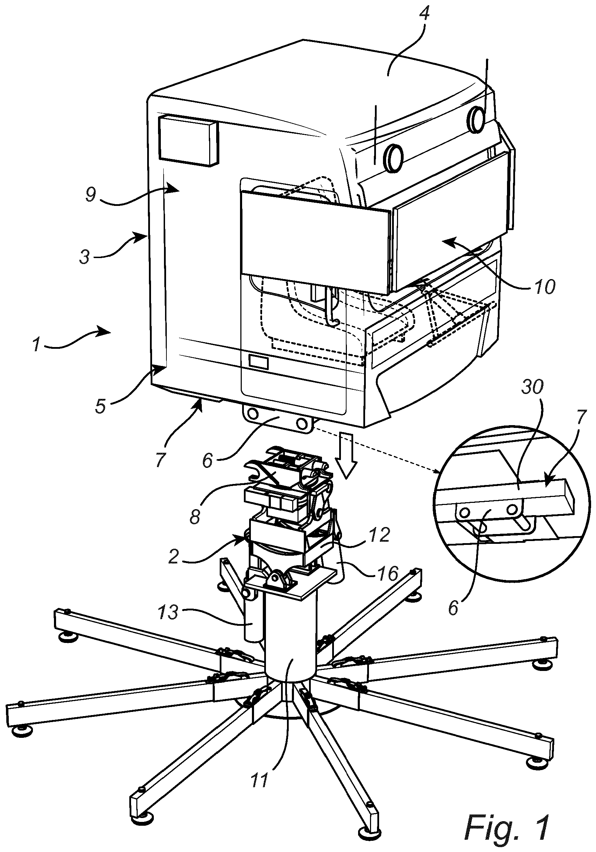

A first embodiment of the vehicle driving simulator 1 is shown in a perspective view in Fig. 1. The vehicle driving simulator 1 comprises a vehicle driving simulator platform 2, and a vehicle compartment 3, which is releasably attached to the vehicle driving simulator platform 2. The vehicle compartment 3 comprises a driver cabin 4, where the driver sits when using the vehicle driving simulator 1. In this first embodiment the driver cabin 4 is truck cabin, which preferably is a real truck cabin taken from an existing truck model. The vehicle compartment 3 further comprises a bottom portion 5, which has a bottom frame 7. The bottom frame 7 comprises a coupling part 6. More particularly, the bottom frame 7 comprises a base beam 30 at which the coupling part 6 is arranged. The vehicle driving simulator platform 2 comprises a vehicle compartment connection 8, with which the coupling part 6 is connected. The vehicle compartment 3 further comprises a top portion 9, which includes the driver cabin 4, and a display device 10 for displaying an environment visible from the driver cabin 4.

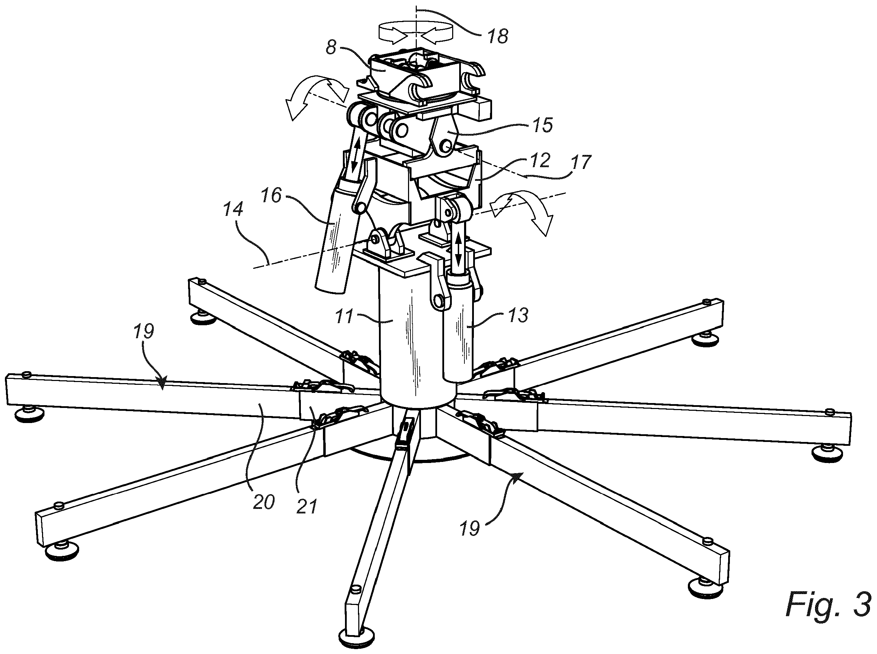

As shown in more detail in Fig. 3, the vehicle driving simulator platform 2 further comprises a base element 11, a pivoting frame 12, arranged at the top of the base element 11, and pivotally attached to the base element 11, and a first pivoting actuator 13 attached to the base element 11 and to the pivoting frame 12 for causing the pivoting frame 12 to pivot about a first horizontal axis 14. Additionally, the vehicle driving simulator platform 2 comprises a first rotator 15 pivotally attached to the pivoting frame 12, a second pivoting actuator 16 attached to the pivoting frame 12 and to the rotator 15 for causing the first rotator 15 to pivot about a second horizontal axis 17, which is perpendicular to the first horizontal axis 14. The vehicle compartment connection 8 is attached to the first rotator 15, and thereby it is rotatable about a centre axis 18, which in an idle position of the vehicle driving simulator platform 2 is vertical. More particularly, the first rotator 15 is arranged on top of the pivoting frame 12.

In this embodiment the vehicle compartment connection 8 is a quick release device, and consequently the coupling part is releasably connected with the vehicle compartment quick release device 8. Inter alia, this is for enabling a user to readily change from one kind of vehicle compartment to another. However, it is of course also feasible to provide a more permanent connection.

The first and second pivoting actuators 13, 16 can be provided as, or comprise, for instance, hydraulic, electro-hydraulic, or electric cylinders, or electric motors. The first pivoting actuator 13 has a lower end 13a, which is connected with the base pillar 11 at the side of the base pillar 11, and an upper end 13b, which is connected with the pivoting frame 12 at a first side thereof. Similarly, the second pivoting actuator 16 has a lower end 16a, which is connected with the pivoting frame 12 at a second side thereof, and an upper end 16b, which is connected with the first rotator 15 at a first side thereof. The first and second pivoting actuators 13, 16 are extendible and retractable.

The base element 11 is a base pillar, i.e. it is vertically elongated. The base element 11 is provided with overturn prevention elements 19 protruding from the base element 11. In this embodiment, the overturn prevention elements 19 are several elongated support bars extending substantially horizontally and radially, and being distributed at equal angles around the base element 11. Furthermore, each overturn prevention element 19 comprises a demountable bar portion 20, which constitutes a major part of its length, and an attachment portion 21 at the base element 11, where the demountable bar portion 20 is fastened. Thereby, the vehicle driving simulator platform 2 becomes compact when demounted, which facilitates transportation of it.

The driver cabin 4 comprises windows 22. The display device comprises a set of monitors 23 arranged outside of the windows 22. Thereby the driver perceives the environment displayed on the monitors 23 as actually existing around the driver cabin 4.

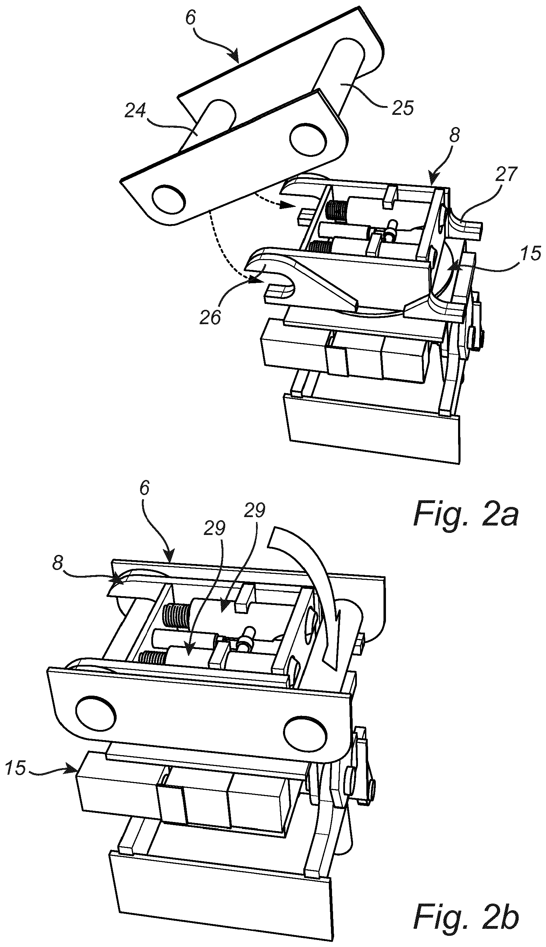

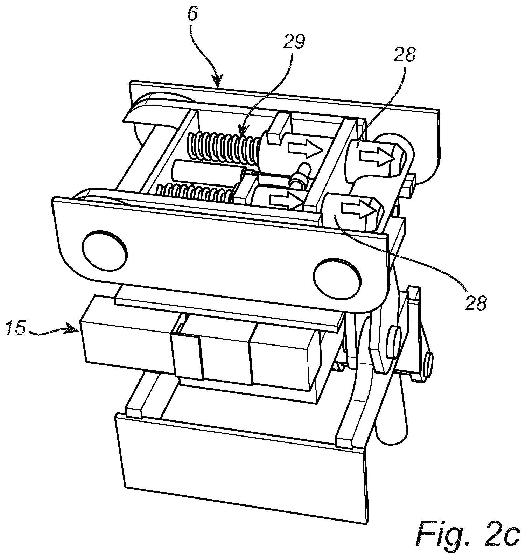

The vehicle compartment 3 is mounted at the vehicle driving simulator platform 2 by means of the interconnecting the connection portion 6 with the vehicle compartment quick release device 8, as shown in Figs. 2a to 2c. The connection portion simply comprises first and second connection bars 24, 25 arranged in parallel and spaced apart. The quick release device 8 comprises a hook portion 26 at one end thereof, and a bar seat 27 at the other opposite end thereof. When mounting the vehicle compartment 3, the vehicle compartment is tilted from a horizontal position, and then horizontally moved so that the first connection bar 24 is received into the hook portion 26. Then the vehicle compartment 3 is pivoted down to the horizontal position, and thereby the second connection bar 25 is rested on the seat 27. Finally, locking elements 28, such as two movable elongated parts 28 of parallel locking actuators 29, are extended above the second connection bar 25, engages with the second connection bar 25, and keeps it in place on the seat 27. The vehicle compartment 3 is demounted in the opposite order, starting with releasing the second connection bar 25 by retracting the locking elements 28 of the locking actuators 29. The locking actuators 29 can be electric, hydraulic or pneumatic, and have a failsafe state in the locked position.

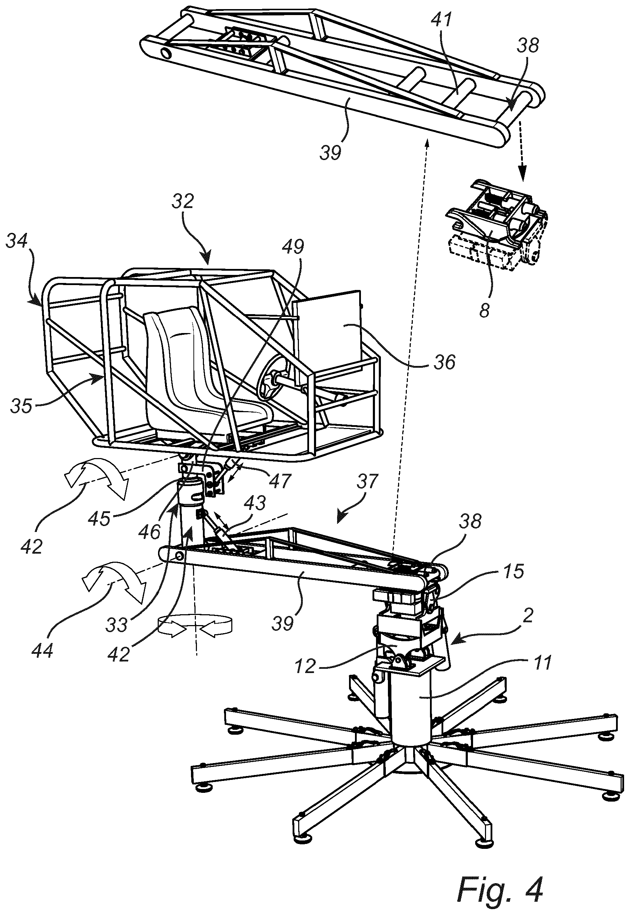

A second embodiment of the vehicle driving simulator 31, as shown in Fig. 4, differs from the first embodiment in that it comprises a different vehicle compartment 32. Therefore, the vehicle driving simulator platform 2 will not be described again, and the same reference numerals thereof as in the previous figures have been used in Fig. 4 as well. The vehicle compartment 32 comprises a bottom portion 33, and a top portion 34. Like in the first embodiment the top portion 34 comprises a driver cabin 35 and a display device 36, and the bottom portion 33 comprises a bottom frame 37 with a coupling part 38 arranged at a base beam 39 of the bottom frame 37.

In this second embodiment, the base beam 39 is elongated, and the coupling part 38 is arranged at a first end of the base beam 39, and comprises first and second coupling bars 40, 41, and the driver cabin 35 is arranged at an opposite second end of the base beam 39. The base beam 39 extends radially of the base element 11 of the vehicle driving simulator platform 2, i.e. it extends perpendicular to the centre axis 18 of the first rotator 15. In an idle state the base beam 39 extends horizontally, but during driving simulation it can be inclined both upwards and downwards.

Furthermore, the bottom portion 33 comprises a driver cabin support 42, which is pivotally connected with the base beam 39, and which supports the driver cabin 35, and a third pivoting actuator 43 attached to the base beam 39 and to the driver cabin support 42 to pivot the driver cabin support 42 about a third horizontal axis 44 positioned where the driver cabin support 42 is attached to the base beam 39, and extending perpendicularly to a longitudinal direction of the base beam 39. The driver cabin support 42 comprises a second rotator 45 at an upper portion of the driver cabin support 42. The driver cabin support 42 is pivotally connected with the second rotator 45, and more particularly with a rotatable top post portion 46 of the second rotator 45. The driver cabin support 42 comprises a fourth pivoting actuator 47, which is connected to the driver cabin 35, at un underside thereof, and to the second rotator 45, for pivoting the driver cabin 35 about a fourth horizontal axis 48 positioned where the driver cabin 35 is pivotally connected with the second rotator 45. More particularly, the second rotator 45 comprises an actuator attachment 49 protruding from the top post portion 46, and the fourth pivoting actuator 47 is pivotally connected with the actuator attachment 49.

In this second embodiment the driver cabin 35 is not a full vehicle cabin but the safety cage of a typical racing car, such as a rally car. It is provided with a driver seat 50 and driving equipment, such as a steering wheel 51 and gear shifting device (not shown). Preferably, the driver cabin 35 is provided with a cover, such as a cloth or a plastic hood, which prevents the driver from being disturb by seeing the surroundings. The display device 36 preferably comprises several consecutive monitors mounted both in front of and at the sides of the driver.

Examples of alternative driver cabins are car cabins of ordinary cars, and cabins of flying vehicles, such as helicopters. Full vehicle compartments with such driver cabins can be manufactured, but alternatively the driver cabin connections for the driver cabin support can be made the same at all these driver cabins, and the same design of the bottom portion 33 can be used as well. Although the connections between the bottom portion 33 and the driver cabin may not be characterized as quick couplings, they can still be made easily mountable and demountable, i.e. the coupling portion 38, 6 is mountable and demountable at the vehicle compartment connection 8.

As regards the first embodiment, different driver cabins from both larger and smaller vehicles can be used, e.g. different rescue vehicle cabins, such as from ambulances and fire engines, ordinary cars, etc.

When the vehicle driving simulator 1 according to the first embodiment is in operation, and the driver is driving the vehicle, a digitally generated but highly realistic environment through which the vehicle is running is played on the display device 10. A control device (not shown as such), such as a general purpose computer executing a simulator control program, controlling the simulator 1 generates movements by means of the vehicle driving simulator platform 2 resembling those experienced in a real situation corresponding with the driving of the vehicle, such as acceleration, retardation, turning, inclination in all directions, road irregularities and bumps, and more. Some perception of skidding can be obtained as well. These movements, or perception of movements, are achieved by controlling the first pivoting actuator 13, the second pivoting actuator 16 and the first rotator 15 by means of the control device. The pivoting frame 12, as well as the first rotator 15 can be designed to be able to pivot up to for example as much as 45 degrees. This makes it possible to simulate severe situations like driving off the road into a ditch.

In the second embodiment of the vehicle driving simulator 31, the additional movement possibilities and the positioning of the driver cabin at a radial distance from the centre of the base element 11, makes it possible to realistically simulate also rally car driving, including jumps, a full experience of skidding, drifting, and a higher level of acceleration. For instance, jumps are simulated with the first pivoting actuator, drifting is simulated by means of combined movements of the first and second rotators 15, 45, and a strong acceleration of retardation is provided by means of the third pivoting actuator 43 alone or in combination with the fourth pivoting actuator 47.

While the invention has been illustrated and described in detail in the drawings and foregoing description, such illustration and description are to be considered illustrative or exemplary and not restrictive; the invention is not limited to the disclosed embodiments.

For instance, more than one pivoting actuator can be arranged for operating the pivoting frame, and for operating the pivoting of the first rotator.

It would be possible, though less advantageous, to change places of the pivoting frame and the first rotator, so that the pivoting frame is placed on top of the first rotator.

Other variations to the disclosed embodiments can be understood and effected by those skilled in the art in practicing the claimed invention, from a study of the drawings, the disclosure, and the appended claims.

## Claims

1. A vehicle driving simulator platform comprising a base element (11), a pivoting frame (12), arranged at the top of the base element, and pivotally attached to the base element, a first pivoting actuator (13) attached to the base element and to the pivoting frame for causing the pivoting frame to pivot about a first horizontal axis, a first rotator (15) pivotally attached to the pivoting frame and arranged on top of the pivoting frame (12), a second pivoting actuator (16) attached to the pivoting frame and to the first rotator for causing the first rotator to pivot about a second horizontal axis, which is perpendicular to the first horizontal axis, and a vehicle compartment connection (8), which is attached to the first rotator, and thereby is rotatable about a centre axis of the first rotator (15).

2. The vehicle driving simulator platform according to claim 1, wherein the vehicle compartment connection (8) is a quick release device.

3. The vehicle driving simulator platform according to claim 1 or 2, wherein the base element (11) is a base pillar.

4. The vehicle driving simulator platform according to any one of the preceding claims, wherein the first pivoting actuator (13) has a lower end, which is connected with the base element (11) at a side of the base element, and an upper end, which is connected with the pivoting frame (12) at a first side thereof, and wherein the first pivoting actuator is extendible and retractable.

5. The vehicle driving simulator platform according to any one of the preceding claims, comprising demountable overturn prevention elements (19) protruding from the base element (11).

6. The vehicle driving simulator platform according to any one of the preceding claims, wherein the second pivoting actuator (16) has a lower end, which is connected with the pivoting frame (12) at a second side thereof, and an upper end, which is connected with the first rotator (15), wherein the second pivoting actuator is extendible and retractable.

7. A vehicle driving simulator comprising a vehicle driving simulator platform (2) according to any one of the preceding claims, and a vehicle compartment (3), which is connected with the vehicle driving simulator platform, the vehicle compartment comprising a bottom portion (5) having a coupling part (6) which is connected with the vehicle compartment connection (8), and a top portion (9) comprising a driver cabin (4) and a display device (10) for displaying an environment visible from the driver cabin.

8. The vehicle driving simulator according to claim 7, wherein the coupling part (6) is releasably connected with the vehicle compartment connection (8).

9. The vehicle driving simulator according to claim 7 or 8, wherein the bottom portion (33) comprises a base beam (39), a driver cabin support (42), which is pivotally connected with the base beam, and which supports the driver cabin (35), and a third pivoting actuator (43) attached to the base beam and to the driver cabin support to pivot the driver cabin support about a third horizontal axis positioned where the driver cabin support is attached to the base beam.

10. The vehicle driving simulator according to claim 9, wherein the driver cabin support (42) comprises a second rotator (45), wherein the driver cabin (35) is pivotally connected with the second rotator.

11. The vehicle driving simulator according to claim 10, wherein the driver cabin support (42) comprises a fourth pivoting actuator (47), which is connected to the driver cabin (35) and to the second rotator (45) for pivoting the driver cabin about a fourth horizontal axis positioned where the driver cabin is pivotally connected with the second rotator.

12. The driving simulator according to any one of claims 9-11, wherein the base beam (39) extends radially of the first rotator (15) and wherein the coupling portion (38) is arranged at a first end of the base beam and the driver cabin (35) is positioned at a second end of the base beam at a radial distance from the first end.

13. The vehicle driving simulator according to any one of claims 7-11, wherein the driver cabin (35) is one of a truck cabin, a rescue vehicle cabin, a car cabin, and a cabin of a flying vehicle.

14. The driving simulator according to any one of claims 7 to 13, wherein the driver cabin (9) comprises windows, and the display device (10) comprises a set of monitors arranged outside of the windows.

## Patentansprüche

1. Fahrzeugfahrsimulatorplattform, umfassend ein Basiselement (11), einen Schwenkrahmen (12), der am oberen Teil des Basiselements eingerichtet ist und schwenkbar an dem Basiselement angebracht ist, einen ersten Schwenkaktor (13), der an dem Basiselement und an dem Schwenkrahmen angebracht ist, um zu bewirken, dass der Schwenkrahmen um eine erste horizontale Achse schwenkt, einen ersten Rotator (15), der schwenkbar an dem Schwenkrahmen angebracht ist und am oberen Teil des Schwenkrahmens (12) eingerichtet ist, einen zweiten Schwenkaktor (16), der an dem Schwenkrahmen und an dem ersten Rotator angebracht ist, um zu bewirken, dass der erste Rotator um eine zweite horizontale Achse schwenkt, die senkrecht zu der ersten horizontalen Achse ist, und eine Fahrzeugraumverbindung (8), die an dem ersten Rotator angebracht ist und dadurch um eine Mittelachse des ersten Rotators (15) drehbar ist.

2. Fahrzeugfahrsimulatorplattform nach Anspruch 1, wobei die Fahrzeugraumverbindung (8) eine Schnelllösevorrichtung ist.

3. Fahrzeugfahrsimulatorplattform nach Anspruch 1 oder 2, wobei das Basiselement (11) eine Basissäule ist.

4. Fahrzeugfahrsimulatorplattform nach einem der vorhergehenden Ansprüche, wobei der erste Schwenkaktor (13) ein unteres Ende, das mit dem Basiselement (11) an einer Seite des Basiselements verbunden ist, und ein oberes Ende, das mit dem Schwenkrahmen (12) an einer ersten Seite davon verbunden ist, aufweist und wobei der erste Schwenkaktor ausfahrbar und einfahrbar ist.

5. Fahrzeugfahrsimulatorplattform nach einem der vorhergehenden Ansprüche, umfassend abnehmbare Umkippverhinderungselemente (19), die von dem Basiselement (11) hervorstehen.

6. Fahrzeugfahrsimulatorplattform nach einem der vorhergehenden Ansprüche, wobei der zweite Schwenkaktor (16) ein unteres Ende, das mit dem Schwenkrahmen (12) an einer zweiten Seite davon verbunden ist, und ein oberes Ende, das mit dem ersten Rotator (15) verbunden ist, aufweist, wobei der zweite Schwenkaktor ausfahrbar und einfahrbar ist.

7. Fahrzeugfahrsimulator, umfassend eine Fahrzeugfahrsimulatorplattform (2) nach einem der vorhergehenden Ansprüche und einen Fahrzeugraum (3), der mit der Fahrzeugfahrsimulatorplattform verbunden ist, wobei der Fahrzeugraum einen unteren Abschnitt (5) mit einem Kopplungsteil (6), der mit der Fahrzeugraumverbindung (8) verbunden ist, und einen oberen Abschnitt (9), umfassend eine Fahrerkabine (4) und eine Anzeigevorrichtung (10) zum Anzeigen einer Umgebung, die von der Fahrerkabine sichtbar ist, umfasst.

8. Fahrzeugfahrsimulator nach Anspruch 7, wobei der Kopplungsteil (6) lösbar mit der Fahrzeugraumverbindung (8) verbunden ist.

9. Fahrzeugfahrsimulator nach Anspruch 7 oder 8, wobei der untere Abschnitt (33) einen Basisbalken (39), einen Fahrerkabinenträger (42), der schwenkbar mit dem Basisbalken verbunden ist und der die Fahrerkabine (35) trägt, und einen dritten Schwenkaktor (43), der an dem Basisbalken und an dem Fahrerkabinenträger angebracht ist, um den Fahrerkabinenträger um eine dritte horizontale Achse zu schwenken, die positioniert ist, wo der Fahrerkabinenträger an dem Basisbalken angebracht ist, umfasst.

10. Fahrzeugfahrsimulator nach Anspruch 9, wobei der Fahrerkabinenträger (42) einen zweiten Rotator (45) umfasst, wobei die Fahrerkabine (35) schwenkbar mit dem zweiten Rotator verbunden ist.

11. Fahrzeugfahrsimulator nach Anspruch 10, wobei der Fahrerkabinenträger (42) einen vierten Schwenkaktor (47) umfasst, der mit der Fahrerkabine (35) und mit dem zweiten Rotator (45) zum Schwenken der Fahrerkabine um eine vierte horizontale Achse verbunden ist, die positioniert ist, wo die Fahrerkabine schwenkbar mit dem zweiten Rotator verbunden ist.

12. Fahrzeugfahrsimulator nach einem der Ansprüche 9-11, wobei der Basisbalken (39) sich radial von dem ersten Rotator (15) erstreckt und wobei der Kopplungsabschnitt (38) an einem ersten Ende des Basisbalkens eingerichtet ist und die Fahrerkabine (35) an einem zweiten Ende des Basisbalkens in einem radialen Abstand von dem ersten Ende positioniert ist.

13. Fahrzeugfahrsimulator nach einem der Ansprüche 7-11, wobei die Fahrerkabine (35) eine von einer Lastwagenkabine, einer Rettungsfahrzeugkabine, einer Autokabine und einer Kabine eines fliegenden Fahrzeugs ist.

14. Fahrzeugfahrsimulator nach einem der Ansprüche 7 bis 13, wobei die Fahrerkabine (35) Fenster umfasst und die Anzeigevorrichtung (10) einen Satz von Bildschirmen umfasst, die auf der Außenseite der Fenster eingerichtet sind.

## Revendications

1. Plateforme de simulateur de conduite de véhicule comprenant un élément de base (11), un cadre pivotant (12) agencé sur le haut de l'élément de base, et fixé de manière pivotante à l'élément de base, un premier actionneur de pivotement (13) fixé à l'élément de base et au cadre pivotant pour faire pivoter le cadre pivotant sur un premier axe horizontal, un premier rotateur (15) fixé de manière pivotante au cadre pivotant et agencé sur le haut du cadre pivotant (12), un deuxième actionneur de pivotement (16) fixé au cadre pivotant et au premier rotateur pour que le premier rotateur pivote sur un deuxième axe horizontal qui est perpendiculaire au premier axe horizontal, et une connexion de compartiment de véhicule (8) qui est fixée au premier rotateur et ce par quoi peut tourner sur un axe central du premier rotateur (15).

2. Plateforme de simulateur de conduite de véhicule selon la revendication 1, dans laquelle la connexion de compartiment de véhicule (8) est un dispositif à libération rapide.

3. Plateforme de simulateur de conduite de véhicule selon la revendication 1 ou 2, dans laquelle l'élément de base est un pilier de base (11).

4. Plateforme de simulateur de conduite de véhicule selon l'une quelconque des revendications précédentes, dans laquelle le premier actionneur de pivotement (13) présente une extrémité inférieure qui est reliée à l'élément de base (11) sur un côté de l'élément de base, et une extrémité supérieure qui est reliée au cadre pivotant (12) sur un premier côté de celui-ci et dans laquelle le premier actionneur de pivotement est extensible et rétractable.

5. Plateforme de simulateur de conduite de véhicule selon l'une quelconque des revendications précédentes, comprenant des éléments anti-renversement démontables (19) faisant saillie de l'élément de base (11).

6. Plateforme de simulateur de conduite de véhicule selon l'une quelconque des revendications précédentes, dans laquelle le second actionneur de pivotement (16) présente une extrémité inférieure qui est reliée au cadre pivotant (12) sur un second côté de celui-ci, et une extrémité supérieure qui est reliée au premier rotateur (15), dans laquelle le second actionneur de pivotement est extensible et rétractable.

7. Simulateur de conduite de véhicule comprenant une plateforme de simulateur de conduite de véhicule (2) selon l'une quelconque des revendications précédentes, et un compartiment de véhicule (3) qui est relié à la plateforme de simulateur de conduite de véhicule, le compartiment de véhicule comprenant une partie inférieure (5) ayant une pièce de couplage (6) qui est reliée à la connexion de compartiment de véhicule (8), et une partie supérieure (9) comprenant une cabine de conducteur (4) et un dispositif d'affichage (10) pour afficher un environnement visible depuis la cabine de conducteur.

8. Simulateur de conduite de véhicule selon la revendication 7, dans lequel la pièce de couplage (6) est reliée de manière amovible à la connexion de compartiment de véhicule (8).

9. Simulateur de conduite de véhicule selon la revendication 7 ou 8, dans lequel la partie inférieure (33) comprend un faisceau de base (39), un support de cabine de conducteur (42) qui est relié de manière pivotante au faisceau de base et qui supporte la cabine de conducteur (35), et un troisième actionneur de pivotement (43) fixé au faisceau de base et au support de cabine de conducteur pour faire pivoter le support de cabine de conducteur sur un troisième axe horizontal positionné où le support de cabine de conducteur est fixé au faisceau de base.

10. Simulateur de conduite de véhicule selon la revendication 9, dans lequel le support de cabine de conducteur (42) comprend un second rotateur (45), dans lequel la cabine de conducteur (35) est reliée de manière pivotante au second rotateur.

11. Simulateur de conduite de véhicule selon la revendication 10, dans lequel le support de cabine de conducteur (42) comprend un quatrième actionneur de pivotement (47) qui est relié à la cabine de conducteur (35) et au second rotateur (45) pour faire pivoter la cabine de conducteur sur un quatrième axe horizontal positionné où la cabine de conducteur est reliée de manière pivotante au second rotateur.

12. Simulateur de conduite de véhicule selon l'une quelconque des revendications 9-11, dans lequel le faisceau de base (39) s'étend radialement du premier rotateur (15) et dans lequel la partie de couplage (38) est agencée à une première extrémité du faisceau de base et la cabine de conducteur (35) est positionnée à une seconde extrémité du faisceau de base à une distance radiale de la première extrémité.

13. Simulateur de conduite de véhicule selon l'une quelconque des revendications 7-11, dans lequel la cabine de conducteur (35) est l'une d'une cabine de camion, d'une cabine de véhicule de secours, d'une cabine de voiture et d'une cabine d'un véhicule volant.

14. Simulateur de conduite de véhicule selon l'une quelconque des revendications 7 à 13, dans lequel la cabine de conducteur (35) comprend des fenêtres, et le dispositif d'affichage (10) comprend un jeu d'écrans agencé hors des fenêtres.
